# EUROPEAN PATENT SPECIFICATION

(11) **EP 2 897 511 B1**
(45) Date of publication and mention of the grant of the patent: **24.04.2019**
(21) Application number: 13776575.6
(22) Date of filing: 02.09.2013
(51) Int. Cl.: A47J 37/06, F24C 15/08, F24C 7/08

(54) **SALAMANDER OVEN**
SALAMANDEROFEN
SALAMANDRE DE CUISINE

(30) Priority: 14.09.2012 IT PC20120008
(43) Date of publication of application: 29.07.2015
(73) Proprietor: Rizzato, Pancrazio, 18039 Ventimiglia (IM) (IT)
(72) Inventor: Rizzato, Pancrazio, 18039 Ventimiglia (IM) (IT)
(74) Representative: Fisauli, Beatrice A. M.
(86) International application number: PCT/IB2013/058223
(87) International publication number: WO 2014/041460

(56) References cited:
- EP-A2- 1 953 456
- CH-A- 307 580
- CH-A- 348 487
- DE-A1- 2 651 719
- DE-U1- 8 502 817
- DE-U1-202004 002 435
- FR-A- 1 264 679
- GB-A- 958 618
- US-A- 3 089 760
- US-A- 4 331 858
- US-B1- 6 380 519

## Description

The present invention relates to a salamander oven for cooking foods and more in particular a salamander oven for household use for cooking meat, fish, shellfish, etc.

There are already known in the field various salamander ovens, suitable for cooking these types of foods, which comprise an insulated cooking compartment open at the front, provided with heating means such as heating elements or the like, in the top part of the compartment.

In general, however, these are ovens for professional use and are not suitable for the household environment, being characterized by large dimensions and above all very high electricity consumption.

In fact, to obtain correct cooking of these types of foods (in particular grilled meats in large cuts), it is important that the inside of the compartment reaches very high temperatures, even exceeding 500°. This allows the hot air that surrounds the food completely to create a thermal shock such as to form a thin outer crust, which contributes to maintaining the liquids inside the food.

However, to support such high temperatures, these ovens require particular measures in the production of their structure (for example to avoid deformations), which cause an increase the cost, weight and dimensions

CH 307580A describes a salamander oven with an electrical heated grill. Furthermore, US 6 380 519 describes an electrical oven having a housing with a turnable lid.

In this context, the object of the present invention is to propose a salamander oven for household use that overcomes the aforesaid problems of the prior art.

In particular, an object of the present invention is to produce a salamander oven for household use, suitable to cook large cuts of meat (such as entrecôte or rib-eye steaks), fish or shellfish.

In particular, an object of the present invention is to provide a salamander oven that provides very high temperatures for cooking the aforesaid foods, but which at the same time has a simple and inexpensive structure.

Another object of the present invention is to produce a salamander oven for household use that enables the temperature of the cooking compartment to be regulated for cooking different types of foods.

These objects are substantially achieved by a salamander oven comprising a casing with external walls and internal lateral and lower partitions defining a cooking compartment with a front opening, heating elements placed in the upper part of said cooking compartment, at least one grill placeable inside said cooking compartment, said casing being provided with reinforcing elements placed between at least two internal lateral partitions, for preventing the deformation thereof as a result of thermal dilation.

The oven thus configured has a simple and inexpensive structure, suitable for products for household use, but at the same time sturdy and capable of withstanding the high temperatures required to cook foods such as grilled meat, fish, shellfish, poultry and the like.

In detail, the reinforcing elements are placed at least between two internal lateral partitions and comprise at least one strut (61) connected at the ends thereto.

Due to this positioning, the internal lateral partitions are subjected to limited deformations, which could otherwise cause problems in the movement of the grill inside the cooking compartment.

Heating elements comprise quartz heating elements capable of heating the cooking compartment up to a temperature of 500°C, which enables ideal cooking of the aforesaid foods.

To maintain the cooking compartment as clean as possible and simplify operations to clean the oven, a container filled with a refractory material is provided under the grill with the purpose both of insulating the lower part of the oven in which some electrical components are placed, and of absorbing the liquids or greases released by the foods during cooking.

Further characteristics and advantages of the present invention will become more - apparent from the following indicative, and therefore non-limiting, description of an example of a preferred but not exclusive embodiment of an auxiliary propulsion system, as illustrated in the accompanying drawings, in which:

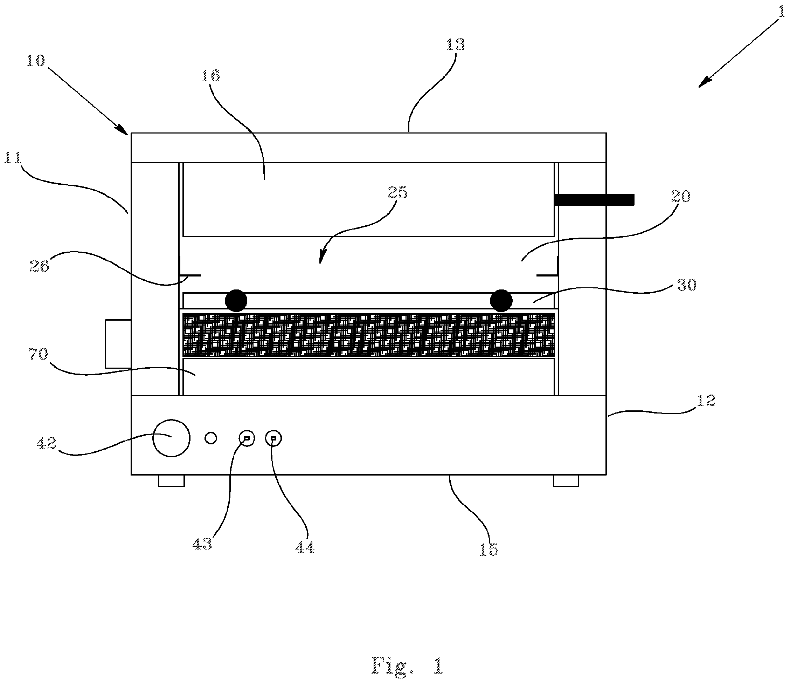

- Fig. 1 is a front view of a salamander oven to the invention;

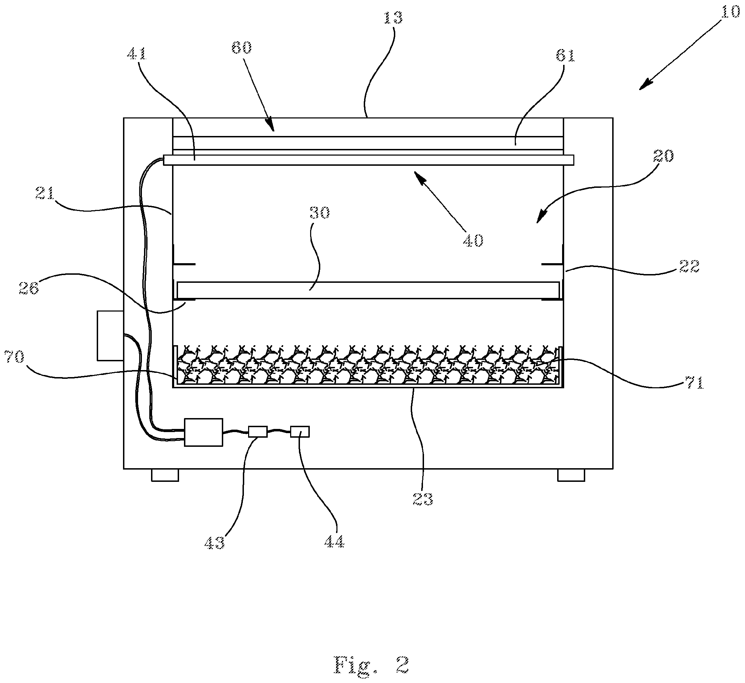

- Fig. 2 is a sectional front view of the salamander oven of Fig. 1;

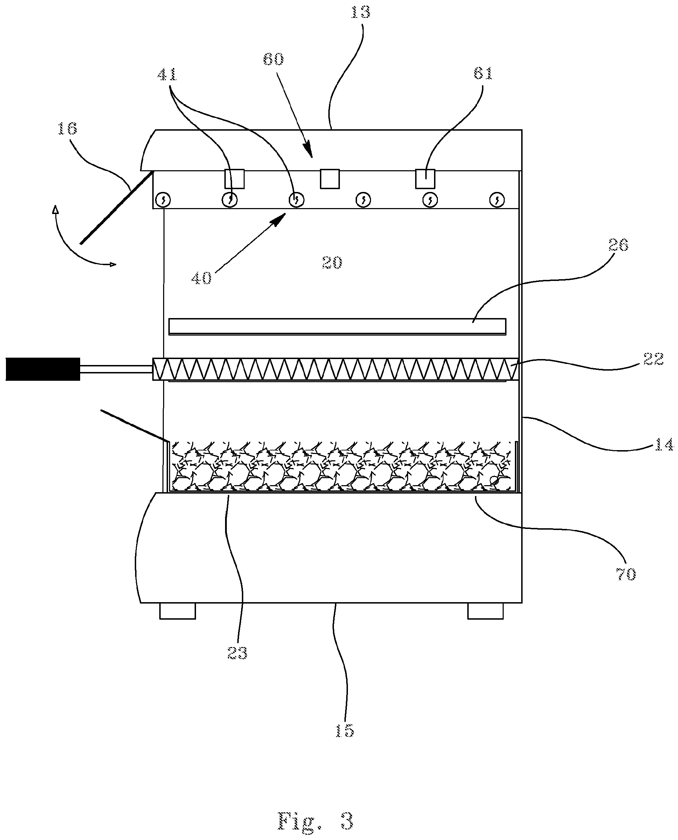

- Fig. 3 is a sectional side view of the salamander oven of Fig. 1.

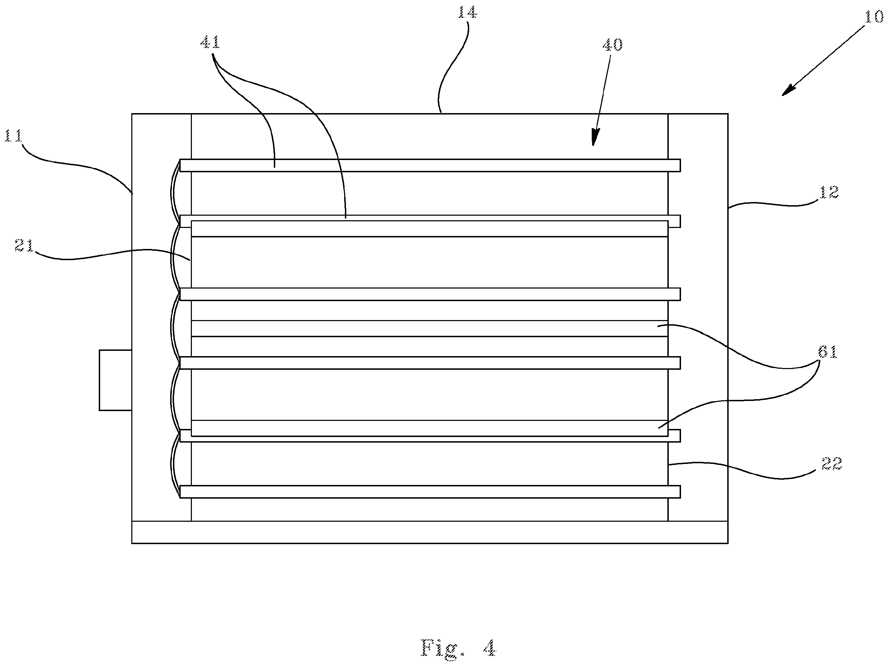

- Fig. 4 is a top view of the salamander oven of Fig. 1.
- Fig. 5 is a schematic view of the electrical circuit of the oven, according to the invention.

With reference to the accompanying figures, the salamander oven, indicated as a whole with 1, comprises a casing 10 in which a cooking compartment 20 is obtained, open at the front and in which a grill 30 can be placed.

In detail, the outer part of said casing 10 is defined by external lateral walls 11 and 12, an external upper wall 13, an external rear wall 14 and an external lower wall 15.

The cooking compartment 20 is in turn defined by internal lateral partitions 21 and 22, by an internal lower partition 23 and by the upper 13 and lower 14 walls of the casing.

At the front, the cooking compartment 20 has an opening 25 that enables the grill 30 to be inserted and removed to position or remove the foods to be cooked.

Said casing 10 is produced with flat panels in stainless steel or other metals with similar properties of resistance to high temperatures and to corrosion.

In the upper part of the cooking compartment heating elements 40 are installed, for generating the heat required to cook the foods placed on the grill 30.

Said heating elements 40 comprise quartz tube heating elements 41 arranged between at least two lateral walls of the cooking compartment 20.

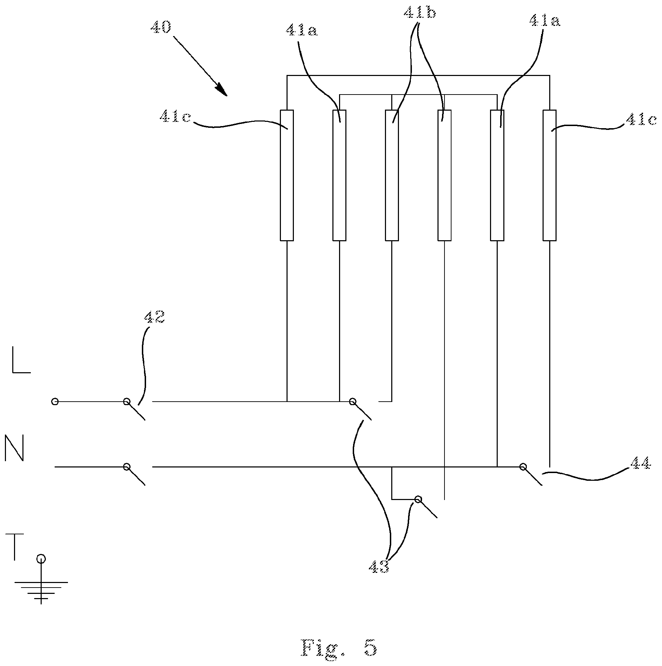

More in detail, the oven can comprise at least two quartz heating elements 41 connected in series and controlled by a thermostat 42 (Fig. 5).

Even more in detail, preferably the oven can comprise three pairs of quartz heating elements 41 connected in parallel with one another with interposing of two switches 43 and 44, with which it is possible to exclude one or two pairs of the total of six heating elements.

In practice, by operating only the thermostat 42, the electrical power is supplied only to a first pair of heating elements 41a.

Instead, by operating the first switch 43, power is supplied to the first pair of heating element 41a and to a second pair of heating elements 41b, while by also operating the second switch 44 power is supplied to all six heating elements 41a, 41b and 41c.

In this way, a wide range of temperatures can be obtained for optimal cooking of different types of foods.

According to a preferred variant, said heating elements 41 have a current absorption of between 350 W and 650 W, and preferably 500 W.

The oven thus configured, with all six heating elements supplied with power, is able to reach temperatures on the grill of between 450°C and 500°C with an absorbed power also compatible with household electrical systems.

As already mentioned, the grill 30 can be inserted into and removed from the cooking compartment to facilitate positioning of the foods to be cooked and their removal after cooking.

For this purpose, the internal lateral partitions 21 and 22 are each provided with at least one support guide 26 that enables said grill 30 to slide to be inserted into or extracted from the cooking compartment 20.

Said guides 26 can comprise, for example, an L-shaped profile connected directly to the internal partition 21 or 22 and in particular arranged with one side parallel and adjacent to the internal surface of the internal partition.
According to a preferred variant, two pairs of guides are provided at different heights to position the grill at greater or lesser distance from the heating elements, according to the food to be cooked.

The structure of the oven is thus greatly simplified to maintain the production costs limited and suitable for those of a non-professional product for household use.

As already mentioned, when subjected to very high temperatures, the metal plates of the casing and in particular the internal partitions, which have a limited thickness to limit the costs and weight, can dilate and therefore become deformed, losing their planarity.

In conventional ovens, these deformations can cause problems during movement of the grill, which could remain jammed between the internal lateral partitions.

For this purpose, the oven according to the invention is provided with reinforcing elements 60 placed between at least two internal partitions, for preventing the deformation thereof as a result of thermal dilation.

Said reinforcing elements 60 are placed at least between the two internal lateral partitions 21 and 22 and, more in particular, are placed in the top part of the casing, where the heating elements 40 are also placed, in other words the part in which the highest temperature is reached.

According to a preferred embodiment, said reinforcing elements 60 can comprise at least one strut 61 connected at the ends to said internal lateral partitions 21 and 22.

Said at least one strut 61 has the function of preventing or at least limiting the deformations of the internal lateral partitions and in particular of preventing these, when deformed, from moving toward each other reducing the space in which the grill 30 slides.

To avoid reducing the useful space of the cooking compartment and interfering with the movement of the grill 30, said strut 61 is arranged on the same plane as or above the heating elements 40.

According to a preferred variant, the oven is provided with three struts 61 arranged between the internal lateral partitions 21 and 22, substantially equidistant from one another.

In this way, although using for the casing 10 metal plates having the same thickness as the metal plates of conventional salamander ovens, it is possible to obtain a sturdier structure suitable to withstand the very high temperatures typical of professional salamander ovens.

Advantageously, according to the invention in the lower part of the cooking compartment 20, a container 70 can be provided, at least partly filled with a refractory material 71.

Said container can, for example, have a tray shape with dimensions substantially coinciding with those of the lower partition 23 of the cooking compartment 20.

The refractory material 71 enables both insulation of the lower part of the oven, in which some electrical components, such as thermostat, the switches and the pilot lights are placed, and also absorption of the liquids released by the foods during cooking.

Preferably, said refractory material 71 is composed of expanded clay granules, which can be easily disposed of and replaced when their absorbing power has been exhausted.

To limit the dispersion of fumes and heat, and any sprays of liquid, outside the cooking compartment, a door 16 can be placed at the opening 25 of the cooking area. P Preferably, said door is configured to only partly cover the opening 25 to enable in any case movement of the grill 30, and is hinged on the casing 10 to rotate and free the opening 25 completely.

## Claims

1. A salamander oven comprising a casing (10) with external walls (11, 12, 13, 14, 15) and internal lateral and lower partitions (21, 22, 23) defining a cooking compartment (20) having only a front opening (25), the oven further comprising heating elements (40), placed in the upper part of said cooking compartment (20), comprising quartz heating elements (41) capable of heating the cooking compartment (20) up to a temperature of 500°C, and at least one grill (30) placeable inside said cooking compartment, the front opening (25) enabling the grill (30) to be inserted and removed to position or remove the foods to be cooked, wherein the internal lateral partitions (21, 22) are each provided with at least one supporting guide (26) enabling sliding of the grill (30) for extraction from and insertion into the cooking compartment (20), and in that said casing (10) is provided with reinforcing elements (60) placed between at least two internal lateral partitions (21, 22), for preventing the deformation thereof as a result of thermal dilation, so that to avoid problems in the movement of the grill (30) inside the cooking compartment (20).

2. The salamander oven according to claim 1, wherein said reinforcing elements (60) are placed in the top part of the casing (10) at an upper wall (13).

3. The salamander oven according to claim 1 or 2, wherein said reinforcing elements (60) comprise at least one strut (61) connected at the ends to said internal lateral partitions (21, 22).

4. The salamander oven according to claim 3, wherein said at least one strut (61) is arranged on the same plane or above said heating elements (40).

5. The salamander oven according to any one of the preceding claims, wherein said guides (26) comprise an L-shaped profile arranged with one side parallel and adjacent to the internal surface of the internal lateral partition (21, 22).

6. The salamander oven according to any one of the preceding claims, wherein a container (70) is placed under the grill (30), said container being filled with a refractory material (71).

7. The salamander oven according to claim 6, wherein said refractory material (71) comprises expanded clay granules.

8. The salamander oven according to claim 7, provided with at least one pair of heating elements (41) connected in series.

9. The salamander oven according to any one of the preceding claims, wherein said heating elements (40) are controlled by a thermostat (42).

10. The salamander oven according to claims 8 and 9, wherein at least three pairs of heating elements (41a, 41b, 41c) are provided, connected in parallel with one another, at least two switches (43, 44) being provided for excluding at least two pairs of said heating elements.

11. The salamander oven according to any one of the preceding claims, wherein at least one door (16) is provided at the opening (25) of the cooking compartment (20), said door being hinged on at least one side to the casing (10) and configured to only partly cover said opening (25).

## Patentansprüche

1. Ein Salamander-Ofen, umfassend ein Gehäuse (10) mit Außenwänden (11, 12, 13, 14, 15) und internen seitlichen und unteren Unterteilungen (21, 22, 23), die einen Kochbereich (20) definieren, der nur eine vordere Öffnung (25) besitzt; der Ofen umfasst ferner Heizelemente (40), platziert im oberen Teil des besagten Kochbereichs (20), umfassend Heizelemente aus Quarz (41), tauglich, den Kochbereich (20) bis zu einer Temperatur von 500° C aufzuheizen, und mindestens einen Rost (30), platzierbar im Inneren des besagten Kochbereichs, wobei die vordere Öffnung (25) dem Rost (30) ermöglicht, eingefügt und entfernt zu werden, um die zu kochenden Speisen zu positionieren oder zu entfernen, wobei jede der internen seitlichen Unterteilungen (21, 22) mit mindestens einer unterstützenden Führung (26) versehen ist, die das Gleiten des Rosts (30) zur Entnahme aus und zur Einführung in den Kochbereich (20) ermöglicht, und wobei besagtes Gehäuse (10) mit Verstärkungselementen (60) ausgestattet ist, platziert zwischen mindestens zwei internen seitlichen Unterteilungen (21, 22), um deren Verformung als Ergebnis der thermischen Ausdehnung zu verhindern, so dass Probleme bei der Bewegung des Rosts (30) im Kochbereich (20) vermieden werden.

2. Der Salamander-Ofen gemäß Anspruch 1, wobei besagte Verstärkungselemente (60) in den oberen Teil des Gehäuses (10) bei einer oberen Wand (13) platziert werden.

3. Der Salamander-Ofen gemäß Anspruch 1 oder 2, wobei besagte Verstärkungselemente (60) mindestens eine Strebe (61) umfassen, die an den Enden mit den besagten internen seitlichen Unterteilungen (21, 22) verbunden sind.

4. Der Salamander-Ofen gemäß Anspruch 3, wobei besagte mindestens eine Strebe (61) auf der gleichen Ebene oder über besagten Heizelementen (40) angeordnet ist.

5. Der Salamander-Ofen gemäß einem jeden der vorhergehenden Ansprüche, wobei besagte Führungen (26) ein L-förmiges Profil umfassen, so angeordnet, dass eine Seite parallel und neben der internen Fläche der internen seitlichen Unterteilung (21, 22) zu liegen kommt.

6. Der Salamander-Ofen gemäß einem jeden der vorhergehenden Ansprüche, wobei ein Behälter (70) unter den Rost (30) gestellt wird, wobei besagter Behälter mit einem feuerfesten Material (71) gefüllt wird.

7. Der Salamander-Ofen gemäß Anspruch 6, wobei besagtes feuerfestes Material (71) Blähtongranulat umfasst.

8. Der Salamander-Ofen gemäß Anspruch 7, versehen mit mindestens einem Paar Heizelementen (41), die hintereinandergeschaltet sind.

9. Der Salamander-Ofen gemäß einem jeden der vorhergehenden Ansprüche, wobei besagte Heizelemente (40) von einem Thermostaten (42) kontrolliert werden.

10. Der Salamander-Ofen gemäß den Ansprüchen 8 und 9, wobei mindestens drei Paar Heizelemente (41a, 41b, 41c) vorgesehen sind, parallel miteinander verbunden, mindestens zwei Schalter (43, 44) vorgesehen sind, um mindestens zwei Paar der besagten Heizelemente auszuschließen.

11. Der Salamander-Ofen gemäß einem jeden der vorhergehenden Ansprüche, wobei mindestens eine Tür (16) bei der Öffnung (25) des Kochbereichs (20) vorgesehen ist, wobei besagte Tür auf mindestens einer Seite am Gehäuse (10) aufgehängt wird und konfiguriert ist, um nur teilweise besagte Öffnung (25) zu bedecken.

## Revendications

1. Four à salamandre comprenant un boîtier (10) avec parois externes (11, 12, 13, 14, 15) et des séparation latérales internes et inférieures (21, 22, 23) définissant un compartiment de cuisson (20) possédant uniquement une ouverture frontale (25), le four comprenant également des éléments chauffants (40), placés dans la partie supérieure dudit compartiment de cuisson (20), comprenant des éléments chauffants à quartz (41) capables de chauffer le compartiment de cuisson (20) jusqu'à une température 500 °C, et au moins une grille (30) pouvant être placée à l'intérieur dudit compartiment de cuisson, l'ouverture frontale (25) permettant à la grille (30) d'être insérée et retirée pour positionner ou retirer les aliments à cuire, où les séparations latérales internes (21, 22) sont chacune dotée d'au moins un guide de soutien (26) permettant le coulissement de la grille (30) pour l'extraction de et l'insertion dans le compartiment de cuisson (20), et dans ledit boîtier (10) sont prévus des éléments de renfort (60) placés entre au moins deux séparations latérales internes (21, 22), pour empêcher la déformation de celui-ci en raison de la dilatation thermique, afin d'éviter les problèmes dans le mouvement de la grille (30) à l'intérieur du compartiment de cuisson (20).

2. Four à salamandre selon la revendication 1, où lesdits éléments de renfort (60) sont placés dans la partie supérieure du boîtier (10) sur une paroi supérieure (13).

3. Four à salamandre selon la revendication 1 ou 2, où lesdits éléments de renfort (60) comprennent au moins un goujon (61) connecté aux extrémités auxdites séparations latérales internes (21, 22).

4. Four à salamandre selon la revendication 3, où ledit goujon (61) au minimum est disposé sur le même plan ou au-dessus desdits éléments chauffants (40).

5. Four à salamandre selon l'une des revendications précédentes, où lesdits guides (26) comprennent un profil en L disposé avec un côté parallèle et adjacent à la surface interne de la séparation latérale interne (21, 22).

6. Four à salamandre selon l'une des revendications précédentes, où un récipient (70) est placé sous la grille (30), ledit récipient étant rempli d'un matériau réfractaire (71).

7. Four à salamandre selon la revendication 6, où ledit matériaux réfractaire (71) comprend des granules d'argile expansée.

8. Four à salamandre selon la revendication 7, équipé d'au moins une paire d'éléments chauffants (41) raccordés en série.

9. Four à salamandre selon l'une des revendications précédentes, où lesdits éléments chauffants (40) sont contrôlés par un thermostat (42).

10. Four à salamandre selon les revendications 8 et 9, où au moins trois paires d'éléments chauffants (41a, 41b, 41c) sont prévues, raccordées en parallèle les unes avec les autres, au moins deux interrupteurs (43, 44) étant prévus pour exclure au moins deux paires desdits éléments chauffants.

11. Four à salamandre selon l'une des revendications précédentes, où au moins une porte (16) est prévue sur l'ouverture (25) du compartiment de cuisson (20), ladite porte étant fixé par charnière sur au moins un côté du boîtier (10) et configuré pour couvrir partiellement seulement ladite ouverture (25).
